(19) Europäisches Patentamt
European Patent Office
Office européen des brevets

(11) Veröffentlichungsnummer: **0 332 068**
**A2**

(12) **EUROPÄISCHE PATENTANMELDUNG**

(21) Anmeldenummer: **89103734.3**

(51) Int. Cl.⁴: **C07F 9/65**

(22) Anmeldetag: **03.03.89**

(30) Priorität: **11.03.88 DE 3808074**

(43) Veröffentlichungstag der Anmeldung:
**13.09.89 Patentblatt 89/37**

(84) Benannte Vertragsstaaten:
**AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Blum, Helmut**
**Bertha-von-Suttner-Strasse 30**
**D-4000 Düsseldorf 13(DE)**
Erfinder: **Hemmann, Siglinde**
**Kantstrasse 28**
**D-4005 Meerbusch 1(DE)**

(54) **Verfahren zur Herstellung von Azacycloalkan-2, 2-disphosphonsäuren.**

(57) Offenbart wird ein Verfahren zur Herstellung von Azacycloalkan-2,2-diphosphonsäuren der allgemeinen Formel

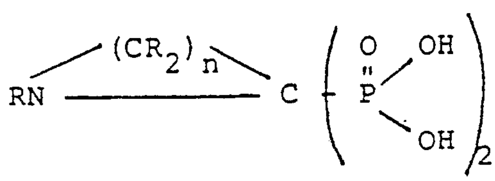

und deren Salzen, wobei
R für Wasserstoff oder einen niederen Alkylrest mit 1 bis 3 C-Atomen und
n für eine ganze Zahl zwischen 3 und 11 steht,
durch Umsetzung eines Lactams der allgemeinen Formel

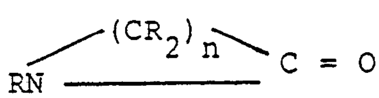

wobei R und n die oben angegebenen Bedeutungen haben, mit einem Phosphortrihalogenid, Phosphonsäure und Wasser in einem inerten Reaktionsmedium und Aufarbeitung in an sich bekannter Weise und gegebenenfalls Überführung in ihre Salze, dadurch gekennzeichnet, daß man als Reaktionsmedium ein alkoxyliertes Ethanoladdukt mit 1 bis 20 Mol Epoxid der allgemeinen Formel

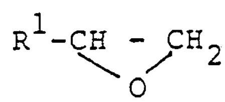

in der $R^1$ für H oder Methyl steht, verwendet.

EP 0 332 068 A2

## Verfahren zur Herstellung von Azacycloalkan-2,2-diphosphonsäuren

Die vorliegende Erfindung betrifft ein Verfahren zur Herstellung von Azacycloalkan-2,2-diphosphonsäuren und deren Salzen durch Umsetzung von Lactamen mit einem Phosphonylierungsreagens mit nachfolgender Hydrolyse und gegebenenfalls Umsetzung in ihre Salze unter Verwendung eines neuen Reaktionsmediums, bei dem die Reaktionsdurchführung im Reaktor einfacher und sicherer erfolgen kann.

Die Herstellung von Azacycloalkan-2,2-diphosphonsäuren ist in den DE-OSen 2 343 196 und 2 541 981 beschrieben. Beide Verfahren gehen von Lactamen aus.

Dabei wird nach der DE-OS 2 343 196 das Lactam aufgeschmolzen und dann mit Phosphortrichlorid versetzt. Eine weitere Möglichkeit besteht im Aufschmelzen einer Lactam-Phosphonsäuremischung, die dann mit weiteren Mengen Phosphortrichlorid umgesetzt wird. Diese Verfahrensweisen haben sich wegen des schwierigen technischen Handlings und der geringen Ausbeute in der Praxis nicht durchgesetzt. So beträgt die Ausbeute laut Patentangaben bei Azacyclohexan-2,2-diphosphonsäure 21 % und bei Azacycloheptan-2,2-diphosphonsäure 32 %. Auch muß wegen der Bildung von Zersetzungsprodukten (überwiegend polymere Phosphoroxide und -hydride) nach der Hydrolyse der Reaktionsmischung eine Reinigung über Aktivkohle erfolgen. Da die Azacycloalkan-2,2-diphosphonsäuren schwer löslich sind und infolgedessen nach der Hydrolyse leicht auskristallisieren, muß die Reinigungsoperation de facto über ein lösliches Natriumsalz erfolgen. Durch Ansäuern wird daraus wieder die reine freie Diphosphonsäure gewonnen.

Nach der DE-OS 2 541 981 wird die Umsetzung der Lactame mit Phosphortrichlorid in allen Ausführungsbeispielen in Gegenwart von Chlorbenzol als Lösungsmittel durchgeführt. Die Ausbeute für Azacycloheptan-2,2-diphosphonsäure wird mit 65 bis 69,9 % angegeben.

Auch dieses Verfahren hat wesentliche technische Nachteile. So bildet sich während der Reaktionszeit ein inhomogenes harziges Reaktionsprodukt, das bis auf das 1,5- bis 2fache des ursprünglichen Reaktionsvolumens aufquillt und an der Oberfläche stark verkrustet. Sobald die Verharzung eintritt, kann das Reaktionsprodukt nicht mehr gerührt werden. Technische Nachteile sind somit, daß der Reaktor nur zu einem Drittel seiner Kapazität ausgenutzt werden kann und durch das Einstellen der Rührung eine erheblich längere Zeit zur Hydrolyse benötigt wird und gleichzeitig damit auch sicherheitstechnische Probleme auftreten. So kann es infolge lokaler Überhitzung sehr rasch zu einem starken HCl-Ausstoß kommen.

Gleichzeitig werden auch hierbei größere Mengen gelborange gefärbte Phosphorpolymere gebildet, die wiederum ein sicherheitstechnisches Problem darstellen, da bei der Hydrolyse bzw. beim Lösen des abgetrennten Reaktionskuchens in Natronlauge erhebliche Mengen an giftigen und selbstenzündlichen Phosphinen gebildet werden.

Die Bildung des festen aufgeschäumten Reaktionsproduktes und der Phosphorpolymeren erfolgt auch dann, wenn andere inerte Lösungsmittel als beispielsweise Chlorbenzol verwendet werden, wie z.B. Diglyme-Typen: z.B. Diglykoldimethylether oder Diethylenglykoldimethylether, Dioxan, Tetrachlorethane, Tetrachlorethylen, Trichlorethylen α-Chlornaphthalin oder dergleichen, wie sie in dieser Druckschrift als geeignet angegeben sind, sowie hochsiedende aliphatische und aromatische Kohlenwasserstoffgemische.

Der vorliegenden Erfindung liegt die Aufgabe zugrunde, das aus der DE-OS 25 41 981 bekannte Verfahren technisch so zu verbessern, daß es während der Reaktionsführung nicht zur Bildung von aufgeschäumten harzigen Reaktionsprodukten kommt, die eine Abführung der Reaktionswärme durch Rühren verhindern. Weiterhin soll der Anteil an Zersetzungsprodukten, nämlich Phosphorpolymeren, reduziert werden, um bei der nachfolgenden Hydrolyse weniger Phosphine zu bilden.

Diese Aufgabe wird durch die Anwendung von bislang für Phosphonylierungsreaktionen noch nicht eingesetzten inerten alkoxylierten Ethanoladdukten gelöst.

Die Erfindung betrifft folglich ein Verfahren zur Herstellung von Azacycloalkan-2,2-diphosphonsäuren der allgemeinen Formel

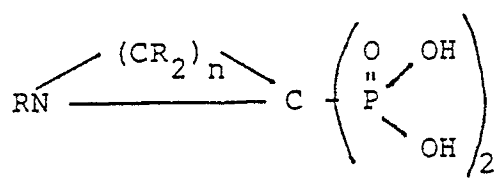

oder deren wasserlösliche Salze, wobei
R für Wasserstoff oder einen niederen Alkylrest mit 1 bis 3 C-Atomen und
n für eine ganze Zahl zwischen 3 und 11 steht,
durch Umsetzung eines Lactams der allgemeinen Formel

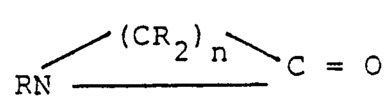

wobei R und n die oben angegebenen Bedeutungen haben, mit einem Phosphortrihalogenid und Phosphonsäure in Gegenwart von Wasser in einem inerten Reaktionsmedium und Aufarbeitung in an sich bekannter Weise und gegebenenfalls Überführung in ihre Salze, das dadurch gekennzeichnet ist, daß man als Reaktionsmedium ein alkoxyliertes Ethanoladdukt mit 1 bis 20 Mol Epoxid der allgemeinen Formel

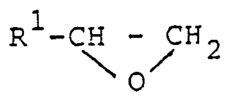

in der $R^1$ für H oder Methyl steht, verwendet.

Bei Verwendung dieses alkoxylierten Ethanoladdukts als Reaktionsmedium, z.B. mit 4,3 Mol Ethylenoxid (EO), bleibt die Reaktionsmischung aus Lactam, Phosphonsäure und Phosphortrichlorid während der gesamten Reaktionsdauer vollständig flüssig und ist damit durchgehend rührbar, wobei der Anteil des Reaktionsmediums in einem weiten Bereich variiert werden kann. Infolgedessen kann das Reaktionsprodukt problemlos hydrolysiert werden.

Überraschenderweise unterbleibt auch die Bildung der unerwünschten gelborangen Zersetzungsprodukte, falls ausreichende Mengen an Reaktionsmedium verwendet werden. Dadurch wird die Gefahr der Bildung von Phosphorwasserstoffen vermieden. Daraus ergibt sich wiederum der Vorteil, daß die freie reine Diphosphonsäure unmittelbar aus dem Reaktionsprodukt nach der Hydrolyse mit Wasser isoliert werden kann. Die Reinigungsstufe über das Natriumsalz, meist in Form des Dinatriumsalzes, entfällt somit.

Mit Vorteil wird als alkoxyliertes Ethanoladdukt ein solches mit 1 bis 10 Mol Epoxid, besonders bevorzugt mit 4 bis 6 Mol Epoxid, verwendet. Diese werden in an sich bekannter Weise durch Umsetzung von Ethanol oder einem alkoxylierten Ethanoladdukt, wie beispielsweise Ethyldiglykol (Diethylenglykolmonoethylether) mit definierten Mengen Ethylenoxid oder Propylenoxid erhalten.

Auch die Menge des als Reaktionsmedium eingesetzten alkoxylierten Ethanoladdukts ist nicht kritisch. Nach oben hin wird sie naturgemäß durch Kostengesichtspunkte begrenzt, sobald eine weitere Verdünnung der Ausgangsstoffe in der Ausgangsreaktionsmischung keine Ausbeutesteigerung mehr zeigt. Andererseits kommt es aber auch bei der Verwendung geringer Mengen an Reaktionsmedium nicht zur Verharzung und zum Aufschäumen des Reaktionsproduktes. Die Kapazität des Reaktors kann somit voll genutzt werden.

Die in diesen Fällen auftretenden Konzentrationen an gelb gefärbten Zersetzungsprodukten sind gering. Eine zügige technische Aufarbeitung wird dadurch nicht behindert, auch wenn in diesen Fällen eine Raffination über das Alkalisalz erfolgt. Auf jeden Fall kommt est zu einer erheblichen Zeiteinsparung. Falls nicht ein hochreines Produkt gewünscht wird, ist es normalerweise auch hierbei nicht notwendig, eine Reinigung über das Alkalisalz durchzuführen, da infolge der geringen Polymerenbildung die Verunreinigungsquote minimal ist.

Insbesondere ist das alkoxylierte Ethanoladdukt als Reaktionsmedium für die Synthese von Azacyclopentan-2,2-diphosphonsäure, Azacyclohexan-2,2-diphosphonsäure, Azacycloheptan-2,2-diphosphonsäure und Azacyclooctan-2,2-diphosphonsäure und deren Salzen geeignet, wobei als Phosphortrihalogenid das Phosphortrichlorid verwendet wird.

Zusätzlich wird dem Fachmann ermöglicht, durch Veränderung der Menge des Reaktionsmediums den Syntheseprozeß so zu optimieren, daß einerseits die reine Diphosphonsäure in direkter Weise isoliert werden kann, andererseits zielbewußt die Alkalisalzgewinnung angesteuert wird, da in vielen Fällen beispielsweise die Dinatriumsalzform der Azacycloheptandiphosphonsäure gewünscht wird.

Die vorstehende Beschreibung zeigt, daß alkoxylierte Ethanoladdukte stets dann mit Vorteil als Reaktionsmedium in Phosphonylierungsreaktionen verwendet werden können, wenn übliche Lösemittel versagen.

Die erfindungsgemäße Verfahrensweise wird durch die nachfolgend aufgeführten Beispiele näher erläutert.

Beispiel 1

In eine Mischung von 226 g Caprolactam, 167,4 g 98 %ige Phosphonsäure, 64 g Wasser und 870 g Ethyldiglykol + 2,3 EO wurden anfangs unter Außenkühlung 495 g Phosphortrichlorid getropft. Die Temperatur der Reaktionsmischung erreichte dabei maximal 45 °C. Nach beendeter Phosphortrichloridzugabe wurde das Reaktionsgemisch innerhalb von zwei Stunden auf 110 °C aufgeheizt und weitere zweieinhalb Stunden bei dieser Temperatur nachgerührt. Während der gesamten Reaktionszeit blieb die Reaktionsmischung gut rührbar. Infolge des Ausbleibens eines harzigen Reaktionsprodukts unterblieb auch das voluminöse Aufschäumen.

Nach dem Abkühlen wurde das Reaktionsgut mit 1 l Wasser versetzt und zur vollständigen Hydrolyse kurz zum Sieden erhitzt. Dabei fiel die Diphosphonsäure in Form eines weißen Kristallpulvers aus. Sie wurde nach dem Abkühlen abgesaugt, mit Wasser chloridfrei gewaschen und zum Schluß nochmal mit Ethanol gewaschen. Nach dem

Trocknen wurden 300,4 g = 58 % der Theorie an reiner Azacycloheptan-2,2-diphosphonsäure erhalten.
Analyse: $C_5H_{15}NO_6P_2$, Molmasse 259,0
% C gef. 27,6 (ber. 27,8), % H 5,93 (5,79), % P 23,7 (23,9), % N 5,29 (5,41).
Säure-Base-Titration: Molmassen nach 1 Äqu. Laugenverbrauch 259,9, nach 2 Äqu. 260,1.

Beispiel 2

Eine Mischung von 226 g Caprolactam, 167,4 g 98 %ige Phosphonsäure und 64 g Wasser wurde in 400 g Ethyldiglykol + 2,3 EO analog Beispiel 1 mit 495 g Phosphortrichlorid versetzt und auf 120 °C aufgeheizt. Während der folgenden Reaktionszeit von 2,5 Stunden blieb das Reaktionsgut durchgehend rührbar. Es bildete sich nur eine kleine Menge an gelborange gefärbten Zersetzungsprodukten. Deshalb wurde die nach Hydrolyse erhaltene Diphosphonsäure abgetrennt. Die rohe Säure wurde zwecks weiterer Reinigung in 1 l Wasser suspendiert, mit 50 %iger Natronlauge auf einen pH-Wert von 8,5 gestellt und die ungelösten Polymerprodukte unter Zusatz von Aktivkohle abgetrennt. Nach Ansäuern der Salzlösung mit konzentrierter Salzsäure bis pH = 1 wurde die schwerlösliche Azacycloheptan-2,2-diphosphonsäure abgetrennt. Ausbeute: 331,5 g = 64 %.
Analyse:
% C gef. 27,7 (ber. 27,8), % H 5,95 (5,79), % P 23,8 (23,9), % N 5,34 (5,41).
SB-Titration: Molmasse nach 1 Äqu. Laugenverbrauch 261,2, nach 2 Äqu. 260,7.

Beispiel 3

Analog den Beispielen 1 und 2 wurde ein Syntheseansatz in 580 g Ethyldiglykol + 2,3 EO als Reaktionsmedium durchgeführt. Die Reaktionstemperatur betrug 120 °C. Der Syntheseansatz konnte über die gesamte Reaktionszeit problemlos gerührt werden. Wegen der Bildung geringer Phosphorpolymerprodukte wurde die Diphosphonsäure über die Salzstufe gereinigt. (Die Bildung an Zersetzungsprodukten war auch hier wesentlich geringer als in einem Syntheseansatz mit beispielsweise Diglyme). Ausbeute: 321,2 g = 62 %.
Analyse:
% C gef. 27,9 (ber. 27,8), % H 5,86 (5,79), % P 23,7 (23,9), % N 5,28 (5,41).
SB-Titration: Molmasse nach 1 Äqu. Laugenverbrauch 260,8, nach 2 Äqu. 261,4.

Vergleichsbeispiel 1

226 g Caprolactam, 167,4 g 98 %ige Phosphonsäure und 64 g Wasser wurden in 290 g Diethylenglykol-dimethylether gelöst. Die klare Lösung wurde unter Außenkühlung mit 495 g Phosphortrichlorid versetzt. Anschließend wurde die Reaktionsmischung auf 120 °C aufgeheizt und 2,5 h bei dieser Temperatur belassen. Während des Nacherhitzens verharzte das Reaktionsprodukt und das Rühren mußte eingestellt werden. Zugleich bildete sich eine große Menge gelborange gefärbter Zersetzungsprodukte. Nach der Hydrolyse wurde die verunreinigte Diphosphonsäure abgetrennt und der stark gelborange gefärbte Filter kuchen zwecks Abtrennung der Zersetzungsprodukte - wie in Beispiel 2 beschrieben - in Natronlauge gelöst. Durch Ansäuern mit Salzsäure wurde die Azacycloheptan-2,2-diphosphonsäure in freier Form isoliert. Die Ausbeute betrug 260,5 g = 50,3 %.
Analyse:
% C gef. 27,7 (ber. 27,8), % H 5,89 (5,79), % P 23,7 (23,9), % N 5,31 (5,41).
SB-Titration: Molmasse nach 1 Äqu. Laugenverbrauch 259,8, nach 2 Äqu. 260,1.

Beispiel 4

In eine Mischung von 226 g Caprolactam, 167,4 g 98 %ige Phosphonsäure, 24 g Wasser und 600 g Ethyldiglykol mit 2,3 EO wurden unter Kühlung 495 g Phosphortrichlorid getropft. Die Temperatur stieg dabei auf ca. 45 °C und wurde anschließend innerhalb von 2 h auf 120 °C gesteigert. Bei Erreichen der Endtemperatur bildeten sich eine stark pastöse Reaktionsmasse und geringe Anteile an gefärbten Zersetzungsprodukten. Das Rühren wurde in diesem Fall eingestellt, jedoch unterbleib das unerwünschte Aufschäumen des Reaktionsprodukts. Falls das Rühren fortgesetzt wird, rührt sich der Rührer frei, so daß die Reaktionsmasse nicht mehr bewegt wird. Der Reaktionsansatz wurde 1,5 h bei 120 °C gehalten, auf 50 bis 60 °C abgekühlt und weitere 40 g Wasser zugetropft. Danach wurde wieder auf 120 °C aufgeheizt und bei dieser Temperatur belassen. Insgesamt wurde die Reaktionsmasse somit 2,5 h auf Reaktionstemperatur (120 °C) gehalten. Danach wurde die abgekühlte Reaktionsmasse mit 1 l Wasser hydrolysiert und die in Form eines Kristallpulvers ausgefallene Azacycloheptan-2,2-diphosphonsäure abgetrennt.
Ausbeute 393,7 g = 76 %
Analyse:
% C gef. 27,9 (ber 27,8), % H 5,91 (5,79), % N 5,27 (5,41), % P 23,7 (23,9)
SB-Titration: Molmasse nach 1 Äqu. Laugenverbrauch 262,9, nach 2 Äqu. 259,7.

Anmerkung:

Im Text und in den Patentansprüchen ist davon die Rede, daß beim erfindungsgemäßen Verfahren als Reaktionskomponente "Phosphonsäure" Verwendung findet. Hierbei handelt es sich um "Phosphorige Säure", die laut IUPAC-Regel 5.214 als "Phosphonsäure" bezeichnet wird.

## Ansprüche

1. Verfahren zur Herstellung von Azacycloalkan-2,2-diphosphonsäuren der allgemeinen Formel

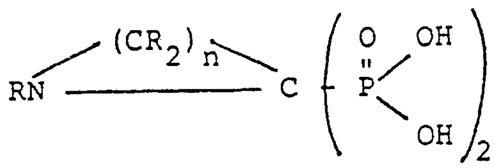

und deren Salzen, wobei
R für Wasserstoff oder einen niederen Alkylrest mit 1 bis 3 C-Atomen und
n für eine ganze Zahl zwischen 3 und 11 steht, durch Umsetzung eines Lactams der allgemeinen Formel

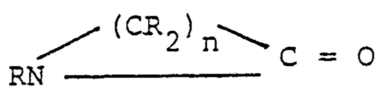

wobei R und n die oben angegebenen Bedeutungen haben, mit einem Phosphortrihalogenid, Phosphonsäure und Wasser in einem inerten Reaktionsmedium und Aufarbeitung in an sich bekannter Weise und gegebenenfalls Überführung in ihre Salze, dadurch gekennzeichnet, daß man als Reaktionsmedium ein alkoxyliertes Ethanoladdukt mit 1 bis 20 Mol Epoxid der allgemeinen Formel

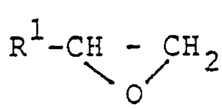

in der $R^1$ für H oder Methyl steht, verwendet.

2. Verfahren nach Anspruch 1, dadurch gekennzeichnet, daß man als Reaktionsmedium ein alkoxyliertes Ethanoladdukt mit 1 bis 10 Mol Epoxid, vorzugsweise 4 bis 6 Mol Epoxid verwendet.

3. Verfahren nach Ansprüchen 1 und 2, dadurch gekennzeichnet, daß sich die alkoxylierten Ethanoladdukte von Umsetzungsprodukten des Ethanols oder des Ethyldiglykols mit Ethylenoxid oder Propylenoxid ableiten.

4. Verwendung eines alkoxylierten Ethanoladdukts gemäß den Ansprüchen 1 bis 3 als Reaktionsmedium in Phosphonylierungsreaktionen, insbesondere zur Synthese von Azacyclo-2,2-diphosphonsäuren und deren Salzen.

5. Verwendung von alkoxylierten Ethanoladdukten nach Anspruch 4 zur Herstellung von Azacyclopentan-2,2-disphosphonsäure, Azacyclohexan-2,2-diphosphonsäure, Azacycloheptan-2,2-diphosphonsäure oder Azacyclooctan- 2,2-diphosphonsäure und deren Salzen.